# FASCICULE DE BREVET EUROPEEN

(11) **EP 1 298 340 B1**
(45) Date de publication et mention de la délivrance du brevet: **18.08.2010**
(21) Numéro de dépôt: 02292137.3
(22) Date de dépôt: 29.08.2002
(51) Int. Cl.: F16D 23/06

(54) **Synchroniseur de boîtes de vitesses pour véhicules automobiles**
Synchronisiereinrichtung für Schaltgetriebe von Kraftfahrzeugen
Synchronizer for gearboxes of motor vehicles

(30) Priorité: 28.09.2001 FR 0112540
(43) Date de publication de la demande: 02.04.2003
(73) Titulaire: Peugeot Citroën Automobiles SA, 92200 Neuilly sur Seine (FR)
(72) Inventeur: Wascheul, Michael, 78260 Achères (FR)

(56) Documents cités:
- DE-B- 1 042 978
- DE-C- 19 580 558
- US-A- 5 022 506

## Description

La présente invention concerne, de façon générale, les synchroniseurs de boîtes de vitesse pour véhicule automobile.

Plus précisément, l'invention concerne un synchroniseur de boîte de vitesse, comprenant un pignon monté libre en rotation sur un arbre ; un moyeu solidaire de l'arbre ; un manchon monté fixe en rotation sur le moyeu et coulissant axialement entre une position de repos relativement distante du pignon et une position d'engagement relativement proche du pignon ; une bague de synchronisation entraînée en rotation par le moyeu, axialement mobile entre le moyeu et le pignon, et comportant une portée conique de friction qui coopère avec une portée complémentaire solidaire du pignon lorsque cette bague est poussée par des moyens d'entraînement ; une denture de crabotage mâle portée par le pignon ; une denture de crabotage femelle portée par une face intérieure du manchon et qui coopère avec la denture de crabotage mâle quand le manchon est dans sa position d'engagement ; et des moyens de positionnement du manchon dans sa position de repos ; les moyens d'entraînement de la bague de synchronisation comprenant au moins un poussoir radial à bille, dont la bille est sollicitée élastiquement vers la face intérieure du manchon, et au moins une rampe d'armement formée sur la face intérieur du manchon et tournée vers le pignon, la rampe d'armement sollicitant axialement la bille vers le pignon quand le manchon est déplacé axialement vers ce même pignon, et le poussoir à bille déplaçant à son tour la bague de synchronisation ; les moyens de positionnement comprenant au moins une butée de positionnement et une rampe de positionnement.

Des synchroniseurs de ce type sont connus de l'art antérieur, en particulier par la demande de brevet français 2 663 708, qui décrit un synchroniseur illustré sur les figures 1 et 2, dont le poussoir à bille 51, solidaire du moyeu 20, comprend un piston 58 mobile radialement par rapport au moyeu, et une bille 52 reposant librement sur une face libre 581 du piston 58. Les déplacements axiaux de la bille 52 sont limités du côté du pignon 10 par une portion inclinée 582 de la surface libre du piston 58 qui se relève vers la face intérieure 32 du manchon 30.

La face intérieure 32 du manchon présente en regard du poussoir à bille 51 un relief 35 comprenant une rampe 53 dite d'armement tournée vers le pignon 10.

Quand le manchon 30 est déplacé axialement vers le pignon 10, la bille 52 est poussée par la rampe d'armement 53 vers le pignon 10, et déplace à son tour la bague de synchronisation 40 par l'intermédiaire d'une butée d'entraînement 44 solidaire de la bague.

La pente de la portion inclinée 582 de la surface libre du piston 58 est donc nécessairement faible car la bille 52 doit rouler sur cette portion inclinée 582 pour se déplacer vers la bague de synchronisation 40, sans venir se coincer contre la face intérieure 32 du manchon.

Quand le manchon est en position de repos, la bille 52 est prise entre la portion inclinée 582 de la face libre 581 du piston et la rampe d'armement 53, exerçant ainsi un effort axial sur le manchon en direction opposée au pignon.

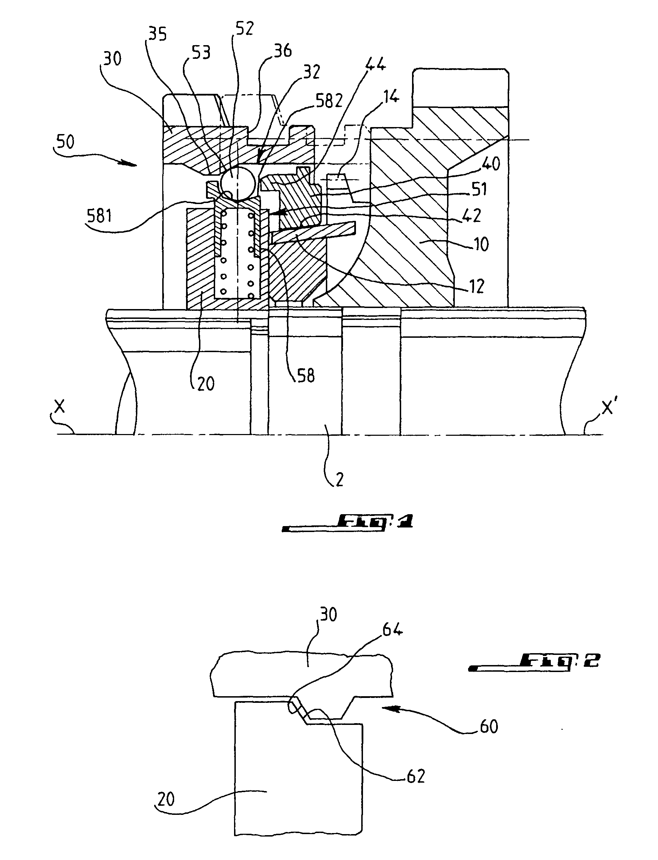

Le déplacement du manchon 30 dans cette direction opposée au pignon est limité par une rampe dite de positionnement 64 formée sur la face intérieure 32 du manchon 30 et tournée dans la direction opposée au pignon 10, qui coopère avec une butée dite de positionnement 62 solidaire du moyeu 20 et tournée vers le pignon 10, comme on peut le voir sur la figure 2.

Le manchon dans sa position de repos vient donc se placer automatiquement en un point déterminé, sous l'effet des efforts exercés par la bille 52 et par la butée de positionnement 62.

Dans le cas d'un synchroniseur double, on a deux pignons montés sur un même axe de part et d'autre d'un moyeu, desservis chacun par un synchroniseur se partageant le même moyeu et le même manchon, du type décrit ci-dessus à l'exception du moyeu, qui ne présente pas de butée de positionnement.

Le moyeu comprend un premier ensemble de poussoirs à bille, associés à des rampes d'armement correspondantes, qui coopèrent avec le premier anneau de synchronisation situé du côté du premier pignon, et un second ensemble de poussoirs à bille en nombre identique, associés à des rampes d'armement correspondantes, qui coopèrent avec le second anneau de synchronisation, situé du côté du second pignon.

Quand le manchon est dans sa position de repos, les efforts exercés par les billes du premier ensemble sur les rampes d'armement correspondantes équilibrent exactement les efforts exercés en sens inverse par les billes du second ensemble sur les rampes d'armement correspondantes.

Néanmoins, les pentes des portions inclinées 582 de la face libre 581 étant faibles, les efforts exercés dans chaque sens sont faibles également, et le positionnement du manchon n'est pas précis.

Le synchroniseur à un seul pignon présente également ce défaut.

Les billes peuvent occasionnellement pousser les anneaux de synchronisation contre les parties correspondantes du pignon, entraînant une perte d'énergie par frottement préjudiciable au rendement de la boîte de vitesse.

On connaît notament du document DE 195 80 558, un synchroniseur conforme au préambule de la revendication 1.

Toutefois ce synchroniseur ne permet pas de positionner précisément les supports de billage entre le moyeu et le manchon.

Le but de la présente invention est de pallier ce problème, et propose un synchroniseur dont la définition est conforme à la partie caractérisante de la revendication 1.

Avantageusement, la denture de crabotage femelle du manchon peut comprendre une pluralité de dents radiales, la ou les dents situées en regard du poussoir à bille comprenant chacune une gorge où la bille vient se loger quand le manchon est dans sa position de repos, la ou les surfaces de ces gorges opposées au pignon définissant conjointement la rampe d'armement, et la ou les surfaces de ces gorges situées du côté du pignon définissant conjointement la rampe de positionnement.

De préférence, la butée de positionnement peut être formée par le côté du logement radial qui est axialement opposé au pignon.

Par exemple, la seconde patte peut être disposée en regard de la butée de positionnement et venir en appui sur celle-ci quand le manchon est dans sa position de repos, sous l'influence de l'effort de réaction de la bille sur la rampe de positionnement.

Avantageusement, le logement radial peut être en forme de T, la barre verticale du T abritant le poussoir à bille et étant encadrée latéralement par deux parties pleines, et la barre latérale du T étant de forme correspondante à la seconde patte.

L'invention concerne également un synchroniseur double de boîte de vitesse comprenant un premier pignon et un second pignon montés libre en rotation sur un arbre de part et d'autre d'un moyeu, caractérisé en ce que le synchroniseur double comprend un premier et un second synchroniseur chacun conforme aux enseignements de l'invention, se partageant le même moyeu et le même manchon axialement mobile entre le moyeu et l'un ou l'autre des premier et second pignons, les supports de billage se répartissant en une première et une seconde séries, les supports de billage de la première série coopérant avec la bague de synchronisation du premier synchroniseur, les supports de billage de la seconde série coopérant avec la bague de synchronisation du second synchroniseur, les supports de billages des première et seconde séries se répartissant autour du moyeu alternativement et régulièrement, l'âme du moyeu qui porte les logements radiaux étant située dans le plan médian du moyeu, et les gorges étant situées dans le plan médian du manchon.

D'autres caractéristiques et avantages de l'invention ressortiront clairement de la description qui en est donnée ci-dessous, à titre indicatif et nullement limitatif, en référence aux dessins annexés dans lesquels :
- la figure 1 est une vue en coupe axiale d'un synchroniseur conforme à l'art antérieur, les traits mixtes représentant le manchon dans sa position d'engagement,
- la figure 2 est une vue en coupe axiale d'un détail du synchroniseur de la figure 1, dans un plan décalé angulairement par rapport au plan de coupe de la figure 1,
- la figure 3 est une vue éclatée d'un synchroniseur selon un premier mode de réalisation de l'invention, l'arbre n'étant pas représenté pour plus de clarté,
- la figure 4 est une vue partielle en perspective du synchroniseur de la figure 3,
- la figure 5 est une vue schématique en coupe axiale du synchroniseur de la figure 3,
- la figure 6 est une vue en perspective du moyeu et des supports de billage dans un second mode de réalisation du synchroniseur selon l'invention,
- la figure 7 est une vue en perspective d'un support de billage de la figure 6, et
- la figure 8 est une vue schématique en coupe axiale du synchroniseur de la figure 6.

L'invention concerne un synchroniseur de boîte de vitesses pour véhicule automobile dont la structure selon l'art antérieur est illustrée sur la figure 1. Un pignon 10 est monté libre en rotation sur un arbre 2 d'axe X-X'. Un moyeu 20, solidaire de l'arbre 2, présentant la forme générale d'un disque, entraîne en rotation un manchon 30. Le manchon 30 présente la forme générale d'un anneau d'axe X-X', monté de façon concentrique sur le moyeu 20 et coulissant axialement entre une position de repos relativement distante du pignon 10 et une position d'engagement relativement proche du pignon 10.

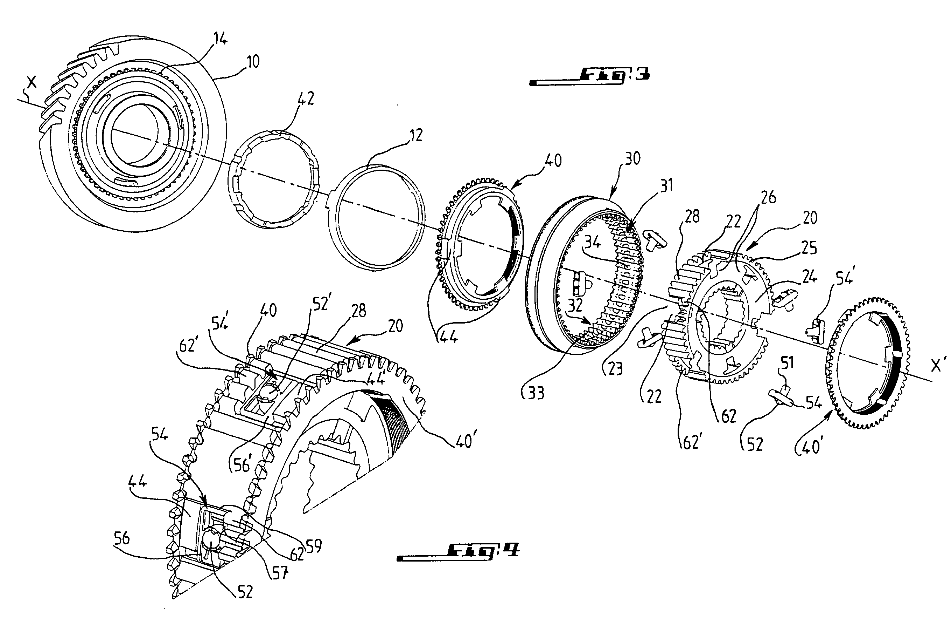

Comme on le voit sur la figure 3, le moyeu comprend une denture mâle radiale 28, et une face intérieure 32 du manchon 30 porte une denture de crabotage femelle 31, engagée en permanence avec la denture mâle radiale 28 du moyeu 20, solidarisant ainsi en rotation du moyeu 20 et le manchon 30.

En revenant à la figure 1, on voit qu'une bague de synchronisation 40 est entraînée en rotation par le moyeu 20. Cette bague de synchronisation 40 est axialement mobile entre une position proche du moyeu 20 et une position proche du pignon 10, et comporte une portée conique de friction 42 qui vient au contact d'une portée complémentaire 12 solidaire du pignon 10 lorsque la bague de synchronisation 40 est poussée par des moyens d'entraînement 50.

Sous l'action du frottement entre les portées 42 et 12, les vitesses de rotation d'une part du pignon 10 et d'autre part de l'ensemble formé par le moyeu 20, le manchon 30 et la bague de synchronisation 40, vont s'égaliser. Le manchon 30 est alors déplacé axialement par une fourchette, non représentée, engagée dans une rainure de fourchette 36, jusqu'à sa position d'engagement. Dans cette position, la denture de crabotage femelle 31 est engagée avec une denture de crabotage mâle 14 porté par le pignon 10, solidarisant en rotation le pignon 10 et le manchon 30, lui-même entraîné par le moyeu 20.

Les moyens d'entraînement 50 de la bague de synchronisation 40 comprennent au moins un poussoir radial à bille 51 et au moins une rampe d'armement 53 formée sur la face intérieure 32 du manchon 30. La bille 52 est sollicitée élastiquement vers la face intérieure 32 du manchon 30.

La rampe d'armement 53 est tournée vers le pignon 10, et sollicite axialement la bille 52 vers le pignon 10 quand le manchon 30 est déplacé axialement vers ce même pignon 10. Le poussoir à bille 51 déplace alors à son tour la bague de synchronisation 40.

Selon l'invention, illustré à la figure 3, le moyeu 20 comprend une âme 24 entourée d'un anneau périphérique 25 d'axe X-X'. La denture mâle 28 est située sur la face radialement extérieure de l'anneau périphérique 25.

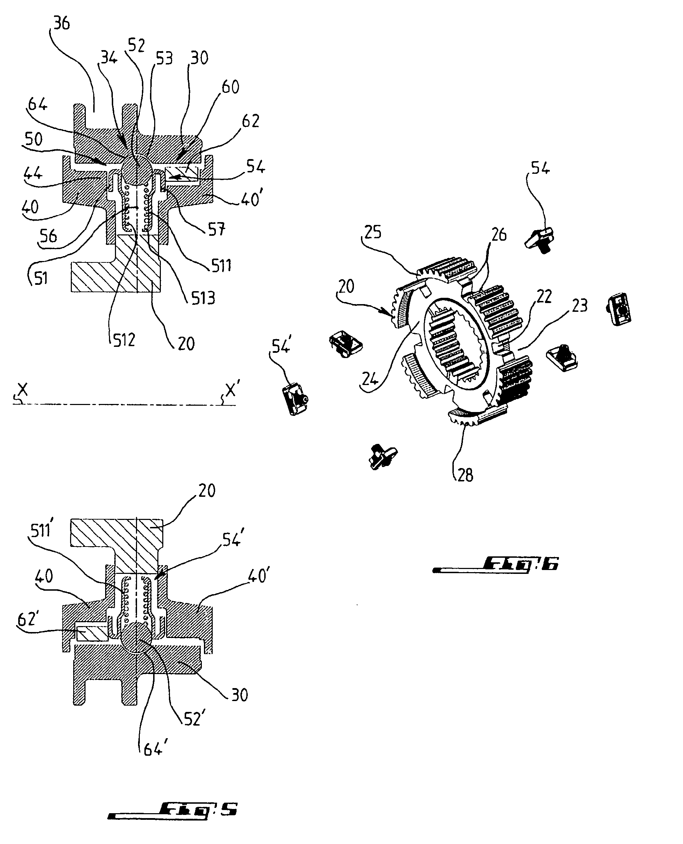

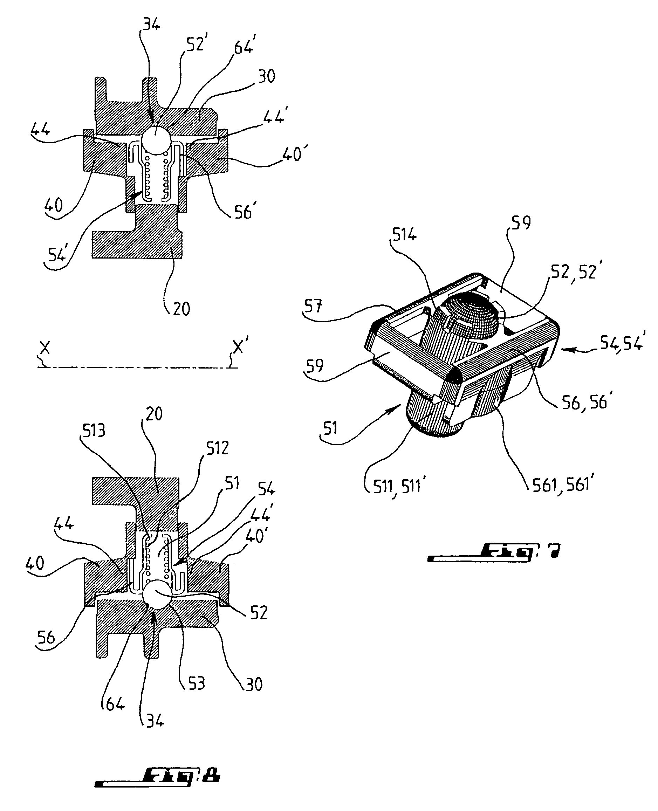

Comme on peut le voir aux figures 5 et 7, le poussoir à bille 51 présente une forme générale sensiblement cylindrique. Il comprend une virole cylindrique 511, un ressort hélicoïdal 512 enroulé à l'intérieur de celle-ci et la bille 52. La base de la virole cylindrique 511 est partiellement fermée par un rebord 513. Le ressort 512 est coaxial à la virole 511 et repose par une extrémité sur le rebord 513. Par une extrémité opposée, le ressort 512 est solidaire de la bille 52, elle-même engagée à l'intérieur de la virole 511. Le ressort 512 sollicite la bille 52 vers l'extrémité radialement extérieure de la virole 511, la bille 52 étant retenue partiellement à l'intérieur de la virole 511 par quatre pattes recourbées 514.

Le poussoir à bille 51 fait partie d'un support de billage 54 reposant dans un logement radial 22 de forme correspondante ménagé dans l'âme 24 du moyeu 20. Ce poussoir à bille 51 est axialement mobile par rapport au moyeu 20.

Le support de billage 54 comprend, outre le poussoir à bille 51, des première et seconde pattes transversales 56 et 57 parallèles, rigidement liées de part et d'autre du poussoir à bille 51. Ces pattes transversales 56 et 57 sont jointes de chaque côté par une autre patte perpendiculaire 59, les quatre pattes 56/57/59 formant ainsi un parallélépipède rectangle.

Les hauteurs respectives des première et seconde pattes 56 et 57 suivant une direction radiale sont égales et plus faibles que la hauteur du poussoir à bille 51.

Le logement radial 22 est en forme de T, la barre verticale du T abritant le poussoir à bille 51 et étant encadrée latéralement par deux parties pleines 26. La barre latérale du T est de hauteur radiale et de largeur correspondantes à celles des première et seconde pattes 56 et 57.

Le logement radial 22 se prolonge axialement en direction du pignon 10 par un évidement 23 de même largeur.

Le logement radial 22 est fermé du côté axialement opposé au pignon 10 par une partie de l'anneau périphérique 25 constituant une butée de positionnement 62.

La bague de synchronisation 40 porte sur une face opposée au pignon 10 au moins une butée d'entraînement 44, de forme correspondante à celle de l'évidement 23.

Comme on peut le voir sur la figure 4, quand la bague de synchronisation 40 est dans sa position proche du moyeu 20, la butée d'entraînement 44 est engagée dans l'évidement 23, et le support de billage 54 est disposé axialement entre la butée de positionnement 62 et la butée d'entraînement 44.

La première patte 56 du support de billage 54 est disposée en regard de la butée d'entraînement 44, et la seconde patte 57 est disposée en regard de la butée de positionnement 62.

La denture de crabotage femelle 31 du manchon 30 comprend une pluralité de dents radiales 33. La ou les dents radiales 33 situées en regard du poussoir à bille 51 présentent chacune une gorge 34 où la bille 52 vient se loger quand le manchon 30 est dans sa position de repos.

Comme on le voit sur la figure 5, la ou les surfaces de ces gorges 34 opposées au pignon 10 définissent conjointement la rampe d'armement 53. La ou les surfaces de ces gorges 34 situées du côté du pignon 10 définissent conjointement la rampe de positionnement 64.

Quand le manchon 30 est déplacé axialement vers le pignon 10 à partir de sa position de repos, la surface d'armement 53 entraîne la bille 52 engagée dans la gorge 34 vers la bague de synchronisation 40. Le support de billage 54 étant rigidement lié à la bille 52 et libre en translation axiale par rapport au moyeu 20, le support de billage 54 se déplace également dans le même sens. La première patte 56 vient alors en appui sur la butée d'entraînement 44, déplaçant la bague de synchronisation 40 vers le pignon 10.

En position de repos du manchon 30, la bille 52 est engagée dans la gorge 34 et est sollicitée par le ressort hélicoïdal 512 vers cette même gorge 34. Sous l'action de la force de réaction sur la rampe de positionnement 64, la seconde patte 57 vient en appui sur la butée de positionnement 62.

Un autre mode de réalisation de l'invention est représenté sur les figures 6 à 8. Le synchroniseur selon ce second mode de réalisation présente des caractéristiques identiques à celles décrites ci-dessus, à l'exception des points mentionnés ci-après. La hauteur radiale de la première patte 56 du support de billage 54 est supérieure à la hauteur radiale de la seconde patte 57. La butée de positionnement 62 n'existe pas, le logement 22 se prolongeant du côté opposé au pignon 10 par un évidement semblable à l'évidement 23.

La première patte 56 vient en butée contre les deux parties pleines 26 du logement 22 quand le manchon 30 est dans sa position de repos, sous l'influence de l'effort de réaction sur la rampe de positionnement 64. La première patte 56 constitue dans ce mode de réalisation la butée de positionnement 62.

Le synchroniseur selon l'invention décrit précédemment peut également être mis en oeuvre dans un synchroniseur double, pour un premier et un second pignon montés libre en rotation sur un arbre de part et d'autre d'un moyeu commun.

Le synchroniseur double comprend un premier et un second synchroniseur tous deux conformes à l'un des modes de réalisation décrit ci-dessus, et symétriques par rapport au plan médian du moyeu.

Dans la description qui suit, les pièces du premier synchroniseur gardent la même référence, les pièces du second synchroniseur prenant la référence de leurs pièces symétriques et s'en différenciant par un signe '.

Ces deux synchroniseurs se partageant le même moyeu 20 et le même manchon 30 axialement mobile entre le moyeu 20 et l'un ou l'autre des premier et second pignons.

Les supports de billage se répartissent en une première et une seconde série 54 et 54', les supports de billage de la première série 54 coopérant avec la bague 40 du premier synchroniseur, les supports de billage de la seconde série 54' coopérant avec une bague 40' du second synchroniseur.

Les supports de billages des première et seconde séries 54 et 54' se répartissent autour du moyeu 20 alternativement et régulièrement.

L'âme 24 du moyeu 20 qui porte les logements 22 est située dans le plan médian du moyeu 20, et les gorges 34 sont situées dans le plan médian du manchon 30.

Pour des synchroniseurs selon le premier mode de réalisation décrit ci-dessus, toutes les billes des supports de billage des première et seconde séries 54 et 54' sont dans les gorges 34 quand le manchon 30 occupe sa position de repos.

Quand le manchon 30 est déplacé vers le premier pignon, les rampes d'armements 53 entraînent les supports de billage de la première série 54 qui poussent à leur tour la bague 40.

Comme on le voit sur la figure 5, les supports de billage de la seconde série 54', sont bloqués dans leur mouvement axial par les butées de positionnement 62'.

Les billes 52' des supports de billage de la seconde série 54' s'effacent dans les viroles 511' sous la pression des rampes de positionnement 64', laissant le manchon 30 coulisser.

Les autres opérations, synchronisation des vitesses et crabotage, sont identiques à celles décrites ci-dessus pour un synchroniseur simple.

Le fonctionnement du synchroniseur double dans la direction du second pignon est exactement symétrique.

Pour des synchroniseurs selon le second mode de réalisation décrit ci-dessus, toutes les billes des supports de billage des première et seconde séries 54 et 54' sont également dans les gorges 34 quand le manchon 30 occupe sa position de repos.

Comme on peut le voir sur la figure 8, chaque support de billage 54 est disposé entre une butée d'entraînement 44 de la bague de synchronisation 40 et une butée d'entraînement 44' de la bague de synchronisation 40'.

La première patte 56, la plus longue, des supports de billage de la première série 54 est disposée du côté du premier pignon, et symétriquement la première patte 56' des supports de billage de la seconde série 54' est disposée du côté du second pignon.

Ces premières pattes 56, 56' comprennent chacune un renflement 561, 561' formés sur les faces des premières pattes 56, 56' tournées respectivement vers les premier et second pignons. Ces renflements viennent s'insérer dans des logements complémentaires situées respectivement sur les butées d'entraînement 44, 44'. Ce dispositif de détrompage permet d'éviter que les supports de billage 54, 54', qui sont asymétriques, soient montés à l'envers.

Quand le manchon 30 est déplacé vers le premier pignon, les rampes d'armements 53 entraînent les supports de billage de la première série 54 qui poussent à leur tour la bague 40.

Les supports de billage de la seconde série 54', sont bloqués dans leur mouvement axial par les pattes 56' butant sur les parties pleines 26.

Les billes 52' des supports de billage de la seconde série 54' s'effacent dans les viroles 511' sous la pression des rampes de positionnement 64', laissant le manchon 30 coulisser.

Le synchroniseur double fonctionne vers le second pignon de façon symétrique.

On comprend bien que le synchroniseur selon l'invention permet un positionnement très précis du manchon dans sa position de repos. La position des billes 52 est bien définie car ces billes sont engagées dans des gorges 34 limitées par les rampes de positionnement et d'armement dont les pentes peuvent être fortes.

Par ailleurs, les supports de billage 54 viennent en butée sur les butées de positionnement 62 dans le premier mode de réalisation et sont donc également positionnés avec précision.

Dans le second mode de réalisation, les supports de billage 54 sont en butée par la première patte 56 sur les parties pleines 26 du moyeu 20 et sont donc également positionnés avec précision.

Dans le cas d'un synchroniseur double, la précision du positionnement du manchon 30 est encore meilleure car des supports de billage symétriques 54 et 54' bloquent les mouvements dans les deux sens grâce aux butées 62 et 62', le manchon ne pouvant se déplacer que si soit les billes 52 soit les billes 52' s'effacent.

## Revendications

1. Synchroniseur de boîte de vitesse, comprenant un pignon (10) monté libre en rotation sur un arbre (2) ; un moyeu (20) solidaire de l'arbre (2) ; un manchon (30) monté fixe en rotation sur le moyeu (20) et coulissant axialement entre une position de repos relativement distante du pignon (10) et une position d'engagement relativement proche du pignon (10) ; une bague de synchronisation (40) entraînée en rotation par le moyeu (20), axialement mobile entre le moyeu (20) et le pignon (10), et comportant une portée conique de friction (42) qui coopère avec une portée complémentaire (12) solidaire du pignon (10) lorsque cette bague de synchronisation (40) est poussée par des moyens d'entraînement (50) ; une denture de crabotage mâle (14) portée par le pignon (10) ; une denture de crabotage femelle (31) portée par une face intérieure (32) du manchon (30) et qui coopère avec la denture de crabotage mâle (14) quand le manchon (30) est dans sa position d'engagement ; et des moyens de positionnement (60) du manchon (30) dans sa position de repos ; les moyens d'entraînement (50) de la bague de synchronisation (40) comprenant au moins un poussoir radial à bille (51), ledit pousoir comprenant une virole (511) de forme générale cylindrique dans laquelle la bille est retenue partiellement à l'intérieur de la virolle (511), la bille étant sollicitée élastiquement vers la face intérieure (32) du manchon (30), et au moins une rampe d'armement (53) formée sur la face intérieur (32) du manchon (30) et tournée vers le pignon (10), la rampe d'armement (53) sollicitant axialement la bille (52) vers le pignon (10) quand le manchon (30) est déplacé axialement vers ce même pignon (10), et le poussoir à bille (51) déplaçant à son tour la bague de synchronisation (40) ; les moyens de positionnement (60) comprenant au moins une butée de positionnement (62) et une rampe de positionnement (64), le poussoir à bille (51) faisant partie d'un support de billage (54) axialement mobile par rapport au moyeu (20), et reposant dans un logement radial (22) de forme correspondante ménagé dans une âme (24) du moyeu (20),
le support de billage (54) comprenant au moins le poussoir à bille (51) de forme sensiblement cylindrique et des première et seconde pattes transversales parallèles (56) et (57) rigidement liées de part et d'autre du poussoir à bille (51), la hauteur des première et seconde pattes (56) et (57) suivant une direction radiale étant plus faible que la hauteur du poussoir à bille (51), la première patte (56) étant disposée en regard de la bague de synchronisation (40) et appuyant sélectivement sur la bague de synchronisation (40) pour la déplacer, **caractérisé en ce que** la hauteur de la première patte (56) est supérieure à la hauteur de la seconde patte (57), la première patte (56) venant en butée contre les deux parties pleines (26) quand le manchon (30) est dans sa position de repos, sous l'influence de l'effort de réaction de la bille (52) sur la rampe de positionnement (64), la première patte (56) constituant alors la butée de positionnement (62).

2. Synchroniseur selon la revendication 1, **caractérisé en ce que** la denture de crabotage femelle (31) du manchon (30) comprend une pluralité de dents (33) radiales, la ou les dents (33) situées en regard du poussoir à bille (51) comprenant chacune une gorge (34) où la bille (52) vient se loger quand le manchon (30) est dans sa position de repos, la ou les surfaces de ces gorges (34) opposées au pignon (10) définissant conjointement la rampe d'armement (53), et la ou les surfaces de ces gorges (34) situées du côté du pignon (10) définissant conjointement la rampe de positionnement (64).

3. Synchroniseur selon la revendication 2, **caractérisé en ce que** la seconde patte (57) est disposée en regard de la butée de positionnement (62) et vient en appui sur celle-ci quand le manchon (30) est dans sa position de repos, sous l'influence de l'effort de réaction de la bille (52) sur la rampe de positionnement (64).

4. Synchroniseur selon la revendication 1, **caractérisé en ce que** le logement radial (22) est en forme de T, la barre verticale du T abritant le poussoir à bille (51) et étant encadrée latéralement par deux parties pleines (26), et la barre latérale du T étant de forme correspondante à la seconde patte (57).

5. Synchroniseur double de boîte de vitesse comprenant un premier pignon et un second pignon montés libre en rotation sur un arbre (2) de part et d'autre d'un moyeu (20), **caractérisé en ce que** le synchroniseur double comprend un premier et un second synchroniseur chacun conforme à l'une quelconque des revendications 1 à 4 combinée à la revendication 2, se partageant le même moyeu (20) et le même manchon (30) axialement mobile entre le moyeu (20) et l'un ou l'autre des premier et second pignons, les supports de billage se répartissant en une première et une seconde séries (54, 54'), les supports de billage de la première série (54) coopérant avec la bague de synchronisation (40) du premier synchroniseur, les supports de billage de la seconde série (54') coopérant avec la bague de synchronisation (40') du second synchroniseur, les supports de billages des première et seconde séries (54, 54') se répartissant autour du moyeu (20) alternativement et régulièrement, l'âme (24) du moyeu (20) qui porte les logements radiaux (22) étant située dans le plan médian du moyeu (20), et les gorges (34) étant situées dans le plan médian du manchon (30).

## Claims

1. Gearbox synchronizer comprising a pinion (10) mounted free to rotate on a shaft (2); a hub (20) secured to the shaft (20; a sleeve (30) mounted such that it cannot rotate on the hub (30) and sliding axially between a rest position relatively distance from the pinion (10) and an engagement position relatively close to the pinion (10); a synchronizing ring (40) rotated by the hub (20), able to move axially between the hub (20) and the pinion (10) and comprising a conical friction surface (42) which collaborates with a complementary surface (12) secured to the pinion (10) when the synchronizing ring (40) is pushed by drive means (50); a male dog-coupling toothset (14) borne by the pinion (10); a female dog-coupling toothset (31) borne by an interior face (32) of the sleeve (30) and which collaborates with the male dog-coupling toothset (14) when the sleeve (30) is in its engagement position; and positioning means (60) for positioning the sleeve (30) in its rest position; the drive means (50) that drive the synchronizing ring (40) comprising at least one radial ball-type pusher (51), the said pusher comprising a shell ring (511) of cylindrical overall shape, in which the ball is partially retained inside the shell ring (511), the said ball being urged elastically towards the interior face (32) of the sleeve (30), and at least one arming ramp (53) formed on the interior face (32) of the sleeve (30) and facing towards the pinion (10), the arming ramp (53) axially urging the ball (52) towards the pinion (10) when the sleeve (30) is wheeled axially towards this same pinion (10), and the ball-type pushed (51) in its turn moving the synchronizing ring (40); the positioning means (60) comprising at least one positioning stop (62) and a positioning ramp (64), the ball-type pusher (51) forming part of a ball-set support (54) able to move axially in relation to the hub (20) and resting in a correspondingly shaped radial housing (22) formed in a web (34) of the hub (20), the ball-set support (54) comprising at least the ball-type pusher (51) of substantially cylindrical shape and first and second parallel transverse tabs (56) and (57) rigidly connected on each side of the ball-type pusher (51). The height of the first and second tabs (56) and (57) in a radial direction being smaller than the height of the ball-type pusher (51), the first tab (56) being positioned facing the synchronizing ring (40) and pressing selectively against the synchronizing ring (40) in order to move it, **characterized in that** the height of the first tab (56) is greater than the height of the second tab (57), the first tab (56) butting against the two solid parts (26) when the sleeve (30) is in its rest position, under the influence of the reactive force of the ball (52) against the positioning ramp (64), the first tab (56) then acting as the positioning stop (62).

2. Synchronizer according to Claim 1, **characterized in that** the female dog-coupling toothset (31) of the sleeve (30) comprises a plurality of radial teeth (33), the tooth or teeth (33) located facing the ball-type pusher (51) each comprising a groove (34) in which the ball (51) can become lodged when the sleeve (30) is in its rest position, the surface or surfaces of these grooves (34) on the opposite side to the pinion (10) jointly defining the arming ramp (53), and the surface or surfaces of these grooves (34) on the same side as the pinion (10) jointly defining the positioning ramp (64).

3. Synchronizer according to Claim 2, **characterized in that** the second tab (57) is positioned facing the positioning stop (62) and presses against the latter when the sleeve (30) is in its rest position, under the influence of the reactive force of the ball (52) against the positioning ramp (64).

4. Synchronizer according to Claim 1, **characterized in that** the radial housing (22) is T-shaped, the vertical bar of the T housing the ball-type pusher (51) and being laterally flanked by two solid parts (26), and the lateral bar of the T being of a shape that corresponds to the second tab (57).

5. Gearbox double synchronizer comprising a first pinion and a second pinion which are mounted free to rotate on a shaft (2) on each side of a hub (20), **characterized in that** the double synchronizer comprises a first and a second synchronizer each according to any one of Claims 1 to 4, combined with Claim 2, sharing the same hub (20) and the same sleeve (30) able to move axially between the hub (20) and one or other of the first and second pinions, the ball-set supports being split between a first series and a second series (54, 54'), the ball-set supports of the first series (54) collaborating with the synchronizing ring (40) of the first synchronizer, the ball-set supports of the second series (54') collaborating with the synchronizing ring (40') of the second synchronizer, the ball-set supports of the first and second series (54, 54') being distributed alternately and evenly about the hub (20), the web (24) of the hub (20), which bears the radial housings (22), being situated in the mid-plane of the hub (20), and the grooves (34) being situated in the mid-plane of the sleeve (30).

## Patentansprüche

1. Schaltgetriebe-Synchronisiereinrichtung, mit einem Ritzel (10), das frei drehbar an einer Welle (2) angebracht ist; einer Nabe (20), die mit der Welle (2) fest verbunden ist; einer Muffe (30), die drehfest an der Nabe (20) angebracht ist und zwischen einer vom Ritzel (10) relativ entfernten Ruheposition und einer zum Ritzel (10) relativ nahen Eingriffsposition axial gleitet; einem Synchronisierring (40), der durch die Nabe (20) rotatorisch angetrieben wird, zwischen der Nabe (20) und dem Ritzel (10) axial beweglich ist und eine konische Reibungsauflagefläche (42) aufweist, die mit einer komplementären Auflagefläche (12) zusammenwirkt, die mit dem Ritzel (10) fest verbunden ist, wenn dieser Synchronisierring (40) durch Antriebsmittel (50) geschoben wird; einer Klauenkupplungsaußenverzahnung (14), die vom Ritzel (10) getragen wird; einer Klauenkupplungsinnenverzahnung (31), die von einer Innenfläche (32) der Muffe (30) getragen wird und die mit der Klauenkupplungsaußenverzahnung (14) zusammenwirkt, wenn sich die Muffe (30) in ihrer Eingriffsposition befindet; und Positionierungsmitteln (60) für die Muffe (30) in ihrer Ruheposition; wobei die Antriebsmittel (50) des Synchronisierrings (40) mindestens einen radialen Kugelstößel (51), wobei der Stößel einen Reif (511) mit im Allgemeinen zylindrischer Form aufweist, wobei die Kugel teilweise im Inneren des Reifs (511) gehalten wird, wobei die Kugel zur Innenfläche (32) der Muffe (30) elastisch beaufschlagt wird, und mindestens eine Gegenrampe (53), die an der Innenfläche (32) der Muffe (30) ausgebildet ist und zum Ritzel (10) gewandt ist, aufweisen, wobei die Gegenrampe (53) die Kugel (52) axial zum Ritzel (10) beaufschlagt, wenn die Muffe (30) axial zu eben diesem Ritzel (10) verlagert wird, und der Kugelstößel (51) seinerseits den Synchronisierring (40) verlagert; wobei die Positionierungsmittel (60) mindestens einen Positionierungsanschlag (62) und eine Positionierungsrampe (64) aufweisen, wobei der Kugelstößel (51) zu einem Kugeleindrückträger (54) gehört, der in Bezug auf die Nabe (20) axial beweglich ist und in einer radialen Aufnahme (22) mit entsprechender Form ruht, die in einem Kern (24) der Nabe (20) ausgebildet ist,
wobei der Kugeleindrückträger (54) mindestens den Kugelstößel (51) mit im Wesentlichen zylindrischer Form und eine erste und eine zweite transversale, parallele Lasche (56) und (57) aufweist, die starr auf beiden Seiten des Kugelstößels (51) verbunden sind, wobei die Höhe der ersten und der zweiten Lasche (56) und (57) in einer radialen Richtung geringer ist als die Höhe des Kugelstößels (51), wobei die erste Lasche (56) gegenüber dem Synchronisierring (40) angeordnet ist und selektiv auf den Synchronisierring (40) drückt, um ihn zu verlagern,
**dadurch gekennzeichnet, dass** die Höhe der ersten Lasche (56) größer ist als die Höhe der zweiten Lasche (57), wobei die erste Lasche (56) an den zwei massiven Teilen (26) unter dem Einfluss der Reaktionskraft der Kugel (52) auf die Positionierungsrampe (64) zur Anlage kommt, wenn sich die Muffe (30) in ihrer Ruheposition befindet, wobei die erste Lasche (56) folglich den Positionierungsanschlag (62) bildet.

2. Synchronisiereinrichtung nach Anspruch 1, **dadurch gekennzeichnet, dass** die Klauenkupplungsinnenverzahnung (31) der Muffe (30) mehrere radiale Zähne (33) aufweist, wobei der Zahn oder die Zähne (33), die gegenüber dem Kugelstößel (51) liegen, jeweils eine Rille (34) aufweisen, in der sich die Kugel (52) absetzt, wenn sich die Muffe (30) in ihrer Ruheposition befindet, wobei die Oberfläche oder die Oberflächen dieser Rillen (34) gegenüber dem Ritzel (10) gemeinsam die Gegenrampe (53) definieren und die Oberfläche oder die Oberflächen dieser Rillen (34), die auf der Seite des Ritzels (10) liegen, gemeinsam die Positionierungsrampe (64) definieren.

3. Synchronisiereinrichtung nach Anspruch 2, **dadurch gekennzeichnet, dass** die zweite Lasche (57) gegenüber dem Positionierungsanschlag (62) angeordnet ist und unter dem Einfluss der Reaktionskraft der Kugel (52) an der Positionierungsrampe (64) an diesem zur Anlage kommt, wenn sich die Muffe (30) in ihrer Ruheposition befindet.

4. Synchronisiereinrichtung nach Anspruch 1, **dadurch gekennzeichnet, dass** die radiale Aufnahme (22) eine T-Form aufweist, wobei das vertikale Glied des T den Kugelstößel (51) beherbergt und seitlich durch zwei massive Abschnitte (26) umrahmt ist, und das laterale Glied des T eine der zweiten Lasche (57) entsprechende Form aufweist.

5. Schaltgetriebe-Doppelsynchronisiereinrichtung, mit einem ersten Ritzel und einem zweiten Ritzel, die frei drehbar an einer Welle (2) auf beiden Seiten einer Nabe (20) angebracht sind, **dadurch gekennzeichnet, dass** die Doppelsynchronisiereinrichtung eine erste und eine zweite Synchronisiereinrichtung jeweils nach einem der Ansprüche 1 bis 4 in Kombination mit Anspruch 2 aufweist, die dieselbe Nabe (20) und dieselbe Muffe (30) gemeinsam nutzen, die zwischen der Nabe (20) und dem einen oder anderen des ersten und des zweiten Ritzels axial beweglich ist, wobei sich die Kugeleindrückträger in eine erste und eine zweite Reihe (54, 54') aufteilen, wobei die Kugeleindrückträger der ersten Reihe (54) mit dem Synchronisierring (40) der ersten Synchronisiereinrichtung zusammenwirken und die Kugeleindrückträger der zweiten Reihe (54') mit dem Synchronisierring (40') der zweiten Synchronisiereinrichtung zusammenwirken, wobei sich die Kugeleindrückträger der ersten und der zweiten Reihe (54, 54') um die Nabe (20) abwechselnd und regelmäßig aufteilen, wobei der Kern (24) der Nabe (20), der die radialen Aufnahmen (22) trägt, in der Mittelebene der Nabe (20) liegt und die Rillen (34) in der Mittelebene der Muffe (30) liegen.
